# EUROPEAN PATENT APPLICATION

(11) **EP 2 983 420 A1**
(43) Date of publication of application: **10.02.2016**
(21) Application number: 14779923.3
(22) Date of filing: 03.04.2014
(51) Int. Cl.: H04W 52/02, H04W 36/16, H04W 36/38, H04W 92/20

(54) **BASE STATION**

(30) Priority: 05.04.2013 JP 2013080002; 29.10.2013 JP 2013224466
(71) Applicant: Kyocera Corporation, Kyoto-shi, Kyoto 612-8501 (JP)
(72) Inventor: FUJISHIRO, Masato, Kyoto-shi Kyoto 612-8501 (JP); MORITA, Kugo, Kyoto-shi Kyoto 612-8501 (JP)
(74) Representative: Schwabe - Sandmair - Marx
(86) International application number: PCT/JP2014/059830
(87) International publication number: WO 2014/163138

(57) **Abstract**

A base station according to an embodiment is a base station for performing communication with a user terminal in a self-cell. The base station comprises: a controller configured to control handover of the user terminal to a neighboring base station before setting a power saving communication mode for performing communication with the user terminal while reducing consumed power in the base station.

## Description

### TECHNICAL FIELD

The present invention relates to a base station used in a mobile communication system.

### BACKGROUND ART

There has been introduced an energy saving technique for reducing consumed power in a base station in the 3GPP (3rd Generation Partnership Project) as a standard project of the mobile communication systems (see Non-Patent Literature 1, for example). For example, consumed power in the base station can be reduced by stopping the operation of a cell in the base station during nighttime with less communication traffics.

### PRIOR ART DOCUMENT

### Non-PATENT DOCUMENT

[Non Patent Literature 1] 3GPP technique specification "TS36.300 V11.4.0" December, 2012

### SUMMARY OF THE INVENTION

However, the operation of a cell in the base station is stopped so that power saving in the base station is realized, but communication with a user terminal is disabled in the cell. Therefore, it is difficult to realize energy saving while restricting a reduction in service quality.

It is therefore an object of the present invention to provide a base station capable of realizing energy saving while restricting a reduction in service quality.

A base station according to a first aspect performs communication with a user terminal in a self-cell. The base station comprises: a controller configured to control handover of the user terminal to a neighboring base station before setting a power saving communication mode for performing communication with the user terminal while reducing consumed power in the base station.

A base station according to a second aspect performs communication with a user terminal in a self-cell. A plurality of kinds of power saving communication modes with different methods for reducing consumed power in the base station are defined. The base station comprises a controller configured to notify a neighboring base station of information indicating at least one of the kind and the setting of a power saving communication mode selected from among the plurality of kinds of power saving communication modes.

A base station according to the present invention can realize energy saving while restricting a reduction in service quality.

### BRIEF DESCRIPTION OF THE DRAWINGS

[Fig. 1] Fig. 1 is a configuration diagram of a LTE system according to a first embodiment.
[Fig. 2] Fig. 2 is a block diagram of UE according to the first embodiment.
[Fig. 3] Fig. 3 is a block diagram of an eNB according to the first embodiment.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 is a diagram illustrating an operation environment according to the first embodiment.
[Fig. 7] Fig. 7 is a diagram for explaining discontinuous transmission according to the first embodiment.
[Fig. 8] Fig. 8 is a diagram for explaining a reduction in transmission antennas according to the first embodiment.
[Fig. 9] Fig. 9 is a sequence diagram of an operation pattern 1 according to the first embodiment.
[Fig. 10] Fig. 10 is a sequence diagram of an operation pattern 2 according to the first embodiment.
[Fig. 11] Fig. 11 is a sequence diagram of an operation pattern 3 according to the first embodiment.
[Fig. 12] Fig. 12 is a flowchart of a power saving communication mode selection processing according to the first embodiment.
[Fig. 13] Fig. 13 is a diagram for explaining an eNB Configuration Update message according to the first embodiment.
[Fig. 14] Fig. 14 is a diagram for explaining an eNB Configuration Update message according to the first embodiment.
[Fig. 15] Fig. 15 is a diagram for explaining a Cell Activation Request message according to the first embodiment.
[Fig. 16] Fig. 16 is a diagram for explaining a Cell Activation Request message according to the first embodiment.
[Fig. 17] Fig. 17 is a sequence diagram of an operation pattern according to a second embodiment.

### DESCRIPTION OF THE EMBODIMENT

### [Overview of Embodiment]

A base station according to an embodiment performs communication with a user terminal in a self-cell. The base station comprises: a controller configured to control handover of the user terminal to a neighboring base station before setting a power saving communication mode for performing communication with the user terminal while reducing consumed power in the base station.

In the embodiment, the controller controls the handover of the user terminal to the neighboring base station on the basis of QoS requested for communication with the user terminal.

In the embodiment, if the QoS cannot be met when the power saving communication mode is set, the controller performs the handover, and then sets the power saving communication mode.

In the embodiment, the controller includes information indicating that the handover is for the power saving communication mode in a handover request to be transmitted to the neighboring base station in a procedure of the handover.

In the embodiment, the controller sets the power saving communication mode in response to reception of a setting request of the power saving communication mode from the neighboring base station to the base station.

In the embodiment, a plurality of kinds of power saving communication modes with different methods for reducing consumed power in the base station are defined. The setting request includes information indicating at least one of the kind and the setting of the power saving communication mode requested for the base station.

In the embodiment, the controller transmits, to a neighboring base station, an inquiry as to whether the power saving communication mode is permitted. The controller sets the power saving communication mode in response to reception of an acknowledge response for the inquiry from the neighboring base station to the base station.

In the embodiment, a plurality of kinds of power saving communication modes with different methods for reducing consumed power in the base station are defined. The inquiry includes information indicating at least one of the kind and the setting of the power saving communication mode scheduled by the base station.

In the embodiment, the inquiry includes information indicating a communication capacity requested for the neighboring base station due to the setting of the power saving communication mode, and/or information indicating the number of user terminals under control of the base station.

In the embodiment, when the power saving communication mode is set, the controller transmits, to the neighboring base station, a completion notification indicating that the power saving communication mode is set.

In the embodiment, a plurality of kinds of power saving communication modes with different methods for reducing consumed power in the base station are defined. The completion notification includes information indicating at least one of the kind and the setting of the power saving communication mode set for the base station.

In the embodiment, the information indicating the setting of the power saving communication mode includes at least either a system frame number or a subframe number to which the power saving communication mode is applied.

In the embodiment, the information indicating the setting of the power saving communication mode is used to allocate MCS whose data rate is a predetermined value or more to the user terminal to which a radio resource within a subframe indicated by the subframe number or a radio resource within a subframe configuring a frame indicated by the system frame number is allocated in the neighboring base station.

In the embodiment, a plurality of kinds of power saving communication modes with different methods for reducing consumed power in the base station are defined. A power saving communication mode to be set for the base station is selected from among the power saving communication modes on the basis of a predefined priority or a communication capacity of the base station.

A base station according to an embodiment performs communication with a user terminal in a self-cell. A plurality of kinds of power saving communication modes with different methods for reducing consumed power in the base station are defined. The base station comprises a controller configured to notify a neighboring base station of information indicating at least one of the kind and the setting of a power saving communication mode selected from among the plurality of kinds of power saving communication modes.

The base station according to the embodiment further comprises: a receiver configured to receive a setting request of requesting to set a power saving communication mode from among the plurality of kinds of power saving communication modes from the neighboring base station. The controller selects the power saving communication mode from among the plurality of kinds of power saving communication modes. The controller notifies the neighboring base station transmitting the setting request of the information.

In the embodiment, the controller requests the neighboring base station to control the setting of the power saving communication mode in the base station. The receiver receives the setting request from the neighboring base station receiving a response of accepting the request.

In the embodiment, the receiver receives a request for the neighboring base station to control the setting of the power saving communication mode in the base station from the neighboring base station. When the controller transmits a response of accepting the request to the neighboring base station, the receiver receives the setting request from the neighboring base station.

In the embodiment, the controller holds a list recording therein the neighboring base station for controlling the setting of the power saving communication mode in the base station. The controller notifies the neighboring base station of the information on the basis of the list.

In the embodiment, the setting request includes information for requesting a mode of restricting an upper limit of a processing load of the base station less than a predetermined value while keeping coverage of the base station as a power saving communication mode to be set for the base station from among the plurality of kinds of power saving communication modes.

In the embodiment, the setting request includes information indicating at least any of a time to start the power saving communication mode, a time to end the power saving communication mode, and a timer value indicating a setting period of the power saving communication mode.

In the embodiment, when a predicted processing capacity of the base station lowers a processing capacity currently requested for the base station assuming that the power saving communication mode is set according to the setting request, the controller notifies the neighboring base station of an inquiry as to whether to set the power saving communication mode according to the setting request.

### [First Embodiment]

Hereinafter, with reference to the accompanying drawings, description will be provided for an embodiment in a case where the present invention is applied to an LTE (Long Term Evolution) which is standardized in the 3GPP standards.

### (Configuration of LTE system)

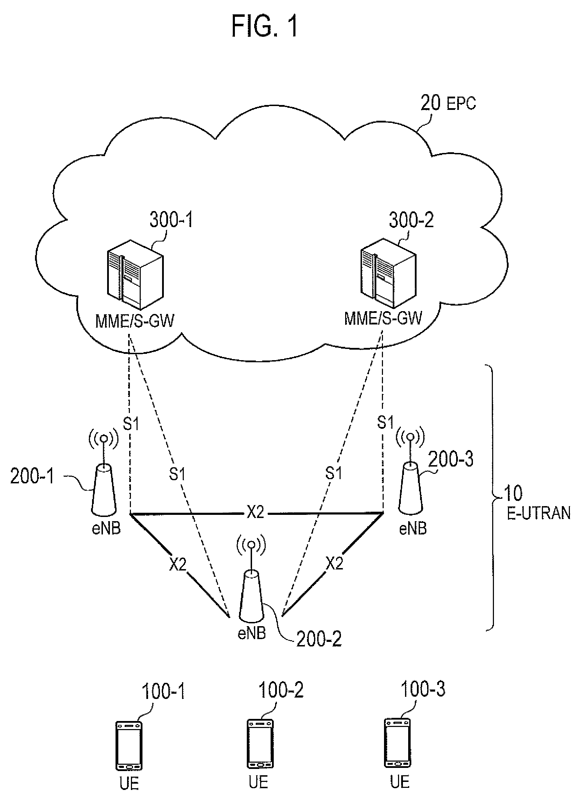

Fig. 1 is a configuration diagram of an LTE system according to the first embodiment. As shown in Fig. 1, the LTE system includes a plurality of UEs (User Equipments) 100, E-UTRAN (Evolved Universal Terrestrial Radio Access Network) 10, and EPC (Evolved Packet Core) 20. The E-UTRAN 10 corresponds to a radio access network and the EPC 20 corresponds to a core network. The E-UTRAN 10 and the EPC 20 configure a network of the LTE system.

The UE 100 is a mobile communication device and performs radio communication with a cell (a serving cell) with which a connection is established. The UE 100 corresponds to a user terminal.

The E-UTRAN 10 includes a plurality of eNBs 200 (evolved Node-Bs). The eNB 200 corresponds to a base station. The eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100.

The eNB 200, for example, has a radio resource management (RRM) function, a function of routing user data, and a measurement control function for mobility control and scheduling.

The EPC 20 includes a plurality of MME (Mobility Management Entity)/S-GWs (Serving-Gateways) 300. The MME is a network node for making various mobility controls and the like for the UE 100 and corresponds to a controller. The S-GW is a network node that performs control to transfer user data and corresponds to a mobile switching center. The EPC 20 including the MME/S-GW 300 accommodates the eNB 200.

The eNBs 200 are connected mutually via an X2 interface. Further, the eNB 200 is connected to the MME/S-GW 300 via an S1 interface.

Next, the configurations of the UE 100 and the eNB 200 will be described.

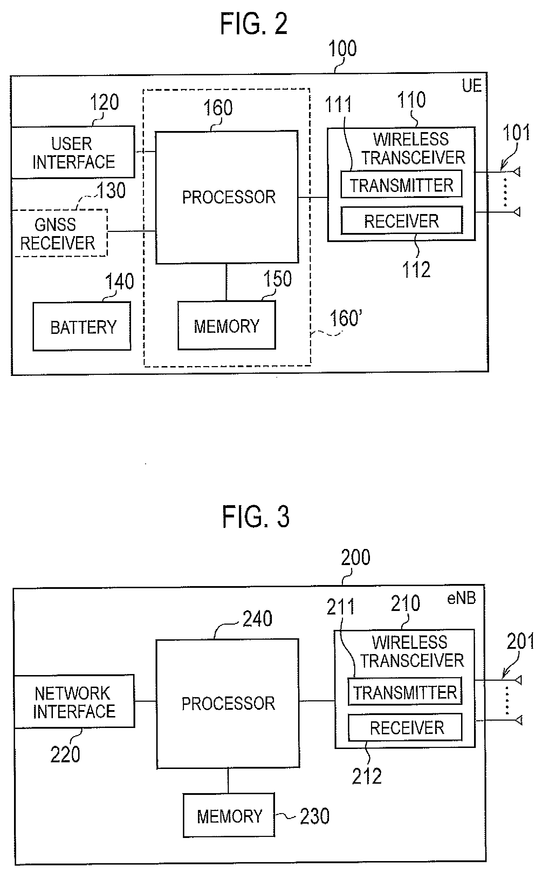

Fig. 2 is a block diagram of the UE 100. As shown in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 configure a controller. The UE 100 may not necessarily include the GNSS receiver 130. Further, the memory 150 may be integrally formed with the processor 160, and this set (that is, a chip set) may be called a processor 160'.

The plurality of antennas 101 and the radio transceiver 110 are used to transmit and receive a radio signal. The radio transceiver 110 includes a transmitter 111 configured to convert a baseband signal (transmission signal) output from the processor 160 into the radio signal, and transmit the radio signal from the plurality of antennas 101. Further, the radio transceiver 110 includes a receiver 112 configured to convert the radio signal received by the plurality of antennas 101 into the baseband signal (reception signal), and output the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 includes a plurality of antennas 201, a radio transceiver 210, a network interface 220, a memory 230, and a processor 240. The memory 230 and the processor 240 configure a controller. It is noted that the memory 230 may be integrally formed with the processor 240, and this set (that is, a chipset) may be called a processor.

The plurality of antennas 201 and the radio transceiver 210 are used to transmit and receive a radio signal. The radio transceiver 210 includes a transmitter 211 configured to convert the baseband signal (transmission signal) output from the processor 240 into the radio signal, and transmit the radio signal from the plurality of antennas 201. Further, the radio transceiver 210 includes a receiver 212 configured to convert the radio signal received by the plurality of antennas 201 into the baseband signal (reception signal), and outputs the baseband signal to the processor 240.

The network interface 220 is connected to the neighboring eNB 200 via the X2 interface and is connected to the MME/S-GW 300 via the S1 interface. The network interface 220 is used in communication made on the X2 interface and communication made on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

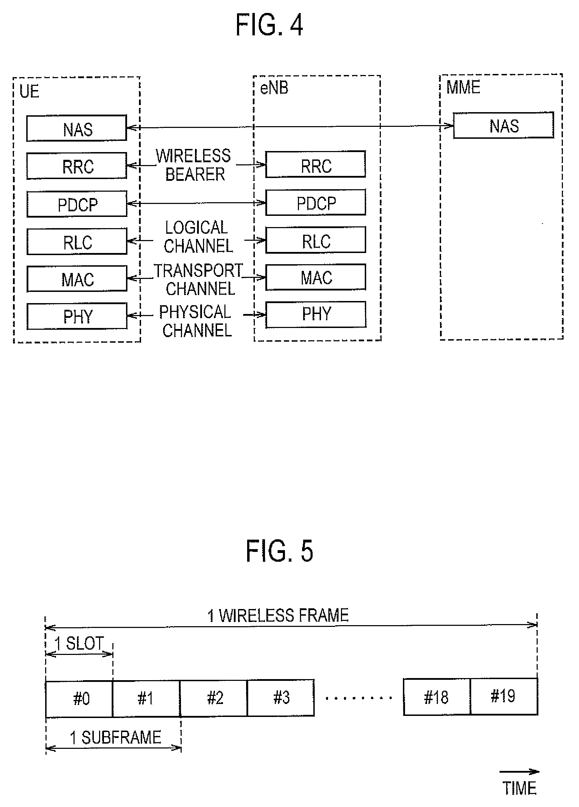

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes a MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data is transmitted via the physical channel.

The MAC layer performs priority control of data, and a retransmission process and the like by hybrid ARQ (HARQ). Between the MAC layer of the UE 100 and the MAC layer of the eNB 200, data is transmitted via a transport channel. The MAC layer of the eNB 200 includes a transport format of an uplink and a downlink (a transport block size and a modulation and coding scheme (MCS)) and a scheduler for deciding a resource block to be assigned.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control message (an RRC message) for various types of setting is transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (an RRC connected state), and when there is no RRC connection, the UE 100 is in an idle state (an RRC idle state).

A NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As shown in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. The resource block includes a plurality of subcarriers in the frequency direction. Among radio resources assigned to the UE 100, a frequency resource can be specified by a resource block and a time resource can be specified by a subframe (or slot).

In the downlink, an interval of several symbols at the head of each subframe is a control region used as a physical downlink control channel (PDCCH) for mainly transmitting a control signal. Further, the other interval of each subframe is a region available as a physical downlink shared channel (PDSCH) for mainly transmitting user data.

In the uplink, both ends in the frequency direction of each subframe are control regions used as a physical uplink control channel (PUCCH) for mainly transmitting a control signal. Further, the central portion in the frequency direction of each subframe is a region mainly capable of being used as a physical uplink shared channel (PUSCH) for transmitting user data.

### (Operations according to first Embodiment)

### (1) Operation outline

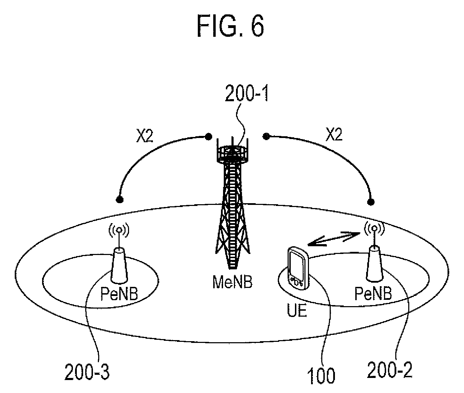

Fig. 6 is a diagram illustrating an operation environment according to the present embodiment. As illustrated in Fig. 6, a pico-eNBs (PeNB) 200-2 and 200-3 are installed in coverage of a macro-eNB (MeNB) 200-1. That is, the MeNB 200-1 and the PeNB 200-2 are adjacent to each other and MeNB 200-1 and the PeNB 200-3 are adjacent to each other.

The MeNB 2-1 manages a macro cell. The PeNBs 200-2 and 200-3 manage a pico-cell, respectively. Further, the UE 100 is located in coverage of the PeNB 200-2 and the UE 100 is adjacent to the PeNB 200-2. The X2 interface is established between the MeNB 200-1 and the PeNB 200-2 and between the MeNB 200-1 and the PeNB 200-3. The X2 interface may also be established between the PeNBs 200-2 and 200-3.

According to the present embodiment, a plurality of kinds of power waving communication modes with different methods for reducing consumed power in the eNB 200 are defined. The power saving communication mode is a mode for performing communication with the UE 100 while consumed power in the eNB 200 is reduced. In the following, the power saving communication mode will be called "partial OFF mode" as needed. The power saving communication mode will be described below in detail.

It is assumed that the PeNB 200-2 sets a power saving communication mode in the operation environment illustrated in Fig. 6. When the PeNB 200-2 sets a power saving communication mode, a communication capacity and/or communication quality in the PeNB 200-2 lowers, and thus QoS (Quality of Service) requested for the communication of the UE 100 cannot be met. QoS is delay time, throughput (band), jitter, or the like.

According to the present embodiment, the PeNB 200-2 controls handover of the UE 100 to a neighboring cell (MeNB 200-1) on the basis of the QoS requested for the communication with the UE 100 (which will be called "requested QoS" below) before setting the power saving communication mode. Specifically, when the requested QoS cannot be met on the setting of the power saving communication mode, the PeNB 200-2 performs handover of the UE 100, and then sets the power saving communication mode. Thereby, energy saving in the PeNB 200-2 can be realized while restricting a reduction in service quality. Further, when the requested QoS can be met even on the setting of the power saving communication mode, handover of the UE 100 is not performed thereby to restrict signaling and processing load.

In the operation pattern 1, when the PeNB 200-2 receives a power saving communication mode setting request (Partial OFF Request) from the MeNB 200-1, the PeNB 200-2 sets the power saving communication mode. Thereby, the MeNB 200-1 can govern the setting of the power saving communication mode in the PeNB 200-2.

In the operation pattern 2, the PeNB 200-2 transmits an inquiry as to whether the power saving communication mode is permitted (Partial OFF Inquiry) to the MeNB 200-1. Then, when the PeNB 200-2 receives an acknowledge response (Partial OFF Response) for the inquiry (Partial OFF Inquiry) from the MeNB 200-1, the PeNB 200-2 sets the power saving communication mode. Thereby, the PeNB 200-2 can govern the setting of the power saving communication mode in the PeNB 200-2.

The PeNB 200-2 may set the power saving communication mode without receiving a request or permission from the MeNB 200-1 (Operation pattern 3).

According to the present embodiment, the PeNB 200-2 includes the information that the handover is directed for the power saving communication mode (or energy saving) in the handover request to be transmitted to the MeNB 200-1 in the handover procedure. Thereby, the MeNB 200-1 can make a decision in consideration of the need of the power saving communication mode when deciding whether to accept the handover request.

According to the present embodiment, when setting the power saving communication mode, the PeNB 200-2 transmits a completion notification indicating that the power saving communication mode is set (Partial OFF Complete) to the MeNB 200-1. Thereby, the MeNB 200-1 can recognize that the PeNB 200-2 is in the power saving communication mode.

The PeNB 200-2 may also perform signaling on the PeNB 200-3. For example, the PeNB 200-2 may transmit the completion notification indicating that the power saving communication mode is set (Partial OFF complete) to the PeNB 200-3.

### (2) Power saving communication mode

As described above, according to the present embodiment, a plurality of kinds of power saving communication modes with different methods for reducing consumed power in the eNB 200 are defined.

The kinds of power saving communication modes include "discontinuous transmission (DTX: Discontinuous Transmission)", "reduction in transmission antennas (ANT reduced)", "reduction in transmission power (TXPower reduced)", "reduction in processing capacity (Capacity reduced)", and the like.

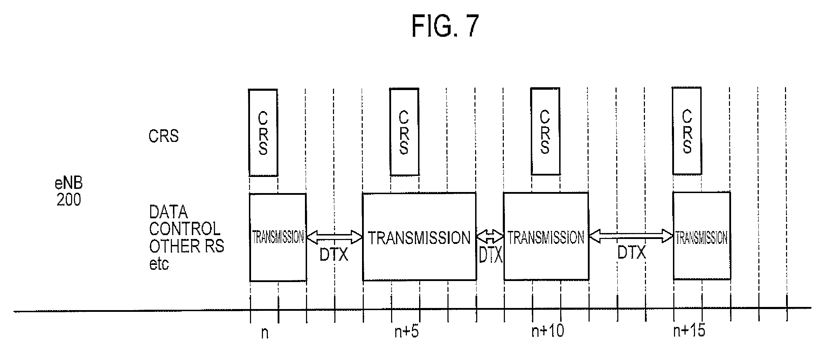

Discontinuous transmission is a power saving communication mode in which the eNB 200 discontinuously transmits a radio signal. Fig. 7 is a diagram for explaining discontinuous transmission according to the present embodiment. As illustrated in Fig. 7, the eNB 200 discontinuously transmits a cell-specific reference signal (CRS). In the example illustrated in Fig. 7, the CRS is transmitted per five subframes. The eNB 200 sets a transmission stop period (DTX period) in a period (subframe) in which transmission of CRS is not performed. In the transmission stop period, power stops being supplied to the transmitter 211 (in particular, the power amplifier) in the eNB 200, thereby realizing energy saving.

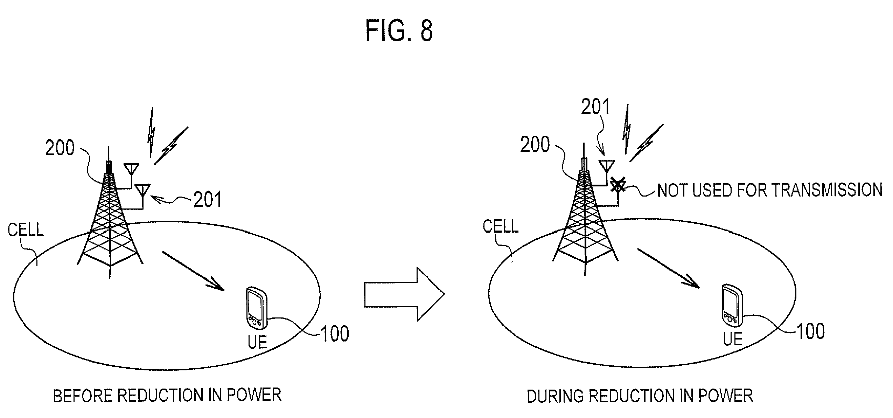

Reduction in transmission antennas is a power saving communication mode of reducing the number of antennas used by the eNB 200 for transmitting a radio signal (which will be called "the number of used antennas" below). Fig. 8 is a diagram for explaining a reduction in transmission antennas according to the present embodiment. As illustrated in Fig. 8, the eNB 200 transmits a radio signal by use of only some of the antennas 201. The number of used antennas is reduced so that consumed power in the eNB 200 (in particular, the transmitter 211) is reduced, thereby realizing energy saving.

Reduction in transmission power is a power saving communication mode in which the eNB 200 redundantly transmits transmission data by use of an excess radio resource while reducing transmission power. The transmission power is reduced so that consumed power in the eNB 200 (in particular, the transmitter 211) is reduced, thereby realizing energy saving in the eNB 200.

Reduction in processing capacity is a power saving communication mode in which an upper limit of the processing capacity of the eNB 200 is restricted less than a predetermined value while keeping coverage of the eNB 200. Herein, the predetermined value is not a value set not to exceed the limit of the processing capacity of the processor 240 but a value set to be lower than the limit of the processing capacity of the processor 240. With such a restriction, it is possible to restrict a reduction in service quality while reducing consumed power in the eNB 200 (in particular, the processor 240).

A kind of reduction in processing capacity is reduction in communication capacity. Reduction in communication capacity is a power saving communication mode in which the quantity of UE connectable to the eNB 200 or the amount of radio resources allocatable for the eNB 200 is restricted. With such a restriction, consumed power in the eNB 200 (in particular, the processor 240) is reduced, thereby realizing energy saving in the eNB 200.

As a method for restricting a processing load of the eNB 200 less than a predetermined value while keeping the coverage of the eNB 200, there are a method for restricting the quantity of UE connectable to the eNB 200, a method for restricting the quantity of UE to be processed at the same time, a method for reducing the amount of calculations due to a change in scheduling algorithm, and the like. The quantity of UE to be processed at the same time is the quantity of UE to be scheduled, the quantity of UE to be subjected to call control, or the like.

In order to keep the coverage of the eNB 200, the reception function of the radio transceiver 210 in the eNB 200 is in a receivable state (or in a discontinuously receivable state).

### (3) Operation sequence

The operation sequence according to the present embodiment will be described below in order of the operation patterns 1 to 3.

### (3.1) Operation pattern 1

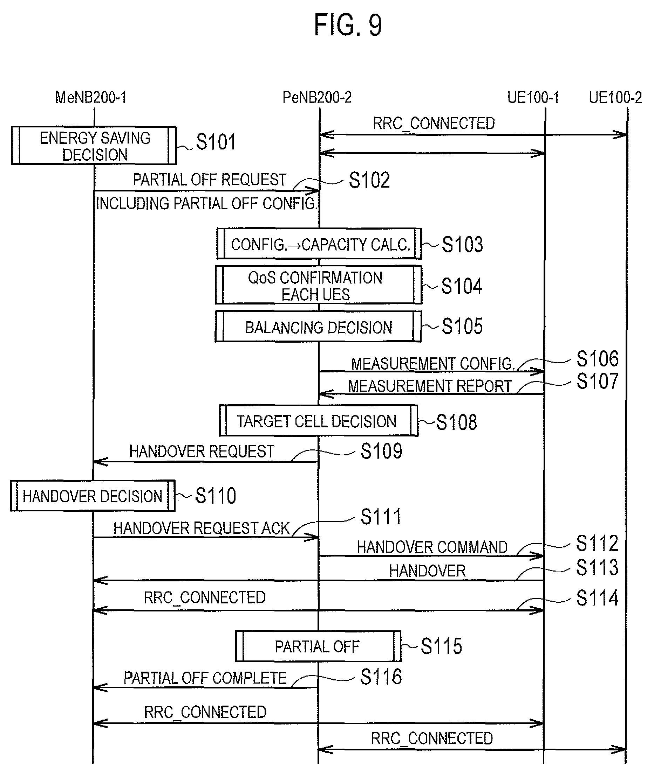

Fig. 9 is a sequence diagram of the operation pattern 1 according to the present embodiment. In the operation pattern 1, the MeNB 200-1 governs to perform energy saving in the PeNB 200-2. In the initial state, the PeNB 200-2 is connected with the UE 100-1 and 100-2.

As illustrated in Fig. 9, in step S101, the MeNB 200-1 decides whether to perform energy saving in the PeNB 200-2. The decision is made in any of the following first to third decision methods.

In the first decision method, the MeNB 200-1 decides whether to perform energy saving in the PeNB 200-2 on the basis of a temporal variation in traffic situation (such as quantity of connected UE, amount of exchanged data, or radio resource using rate) in the MeNB 200-1 and/or the PeNB 200-2. For example, the MeNB 200-1 decides to perform energy saving in the PeNB 200-2 in a time zone with less exchanged data. Alternatively, when the quantity of connected UE to the PeNB 200-2 is lower than a threshold value, the MeNB 200-1 decides to perform energy saving in the PeNB 200-2.

In the second decision method, the MeNB 200-1 decides whether to perform energy saving in the PeNB 200-2 on the basis of a command (energy saving ON/OFF command) from OAM (Operation and Maintenance).

In the third decision method, the MeNB 200-1 decides whether to perform energy saving on the basis of a power supply situation of the MeNB 200-1 or a power supply situation of the PeNB 200-2. When the MeNB 200-1 is notified of the power supply situation of the PeNB 200-2, the MeNB 200-1 can grasp the power supply situation of the PeNB 200-2. For example, when the power supply of the PeNB 200-2 is shut off (in battery drive), when the amount of remaining battery of the PeNB 200-2 lowers a predefined value, or when output power of self-contained power (such as solar) in the PeNB 200-2 lower a predefined value, the MeNB 200-1 decides to perform energy saving in the PeNB 200-2.

Then, in step S102, the MeNB 200-1 transmits a power saving communication mode setting request (Partial OFF Request) to the PeNB 200-2. The setting request (Partial OFF Request) includes the information indicating at least one of the kind and the setting of the power saving communication mode required for the PeNB 200-2. The setting of the power saving communication mode is a discontinuous transmission pattern (such as activation period of the transmitter 211, or transmission stop subframe number (or transmission stop system frame number) or the like) when the power saving communication mode is discontinuous transmission, or the number of transmission antennas (or the number of an antenna to stop using) when the power saving communication mode is reduction in transmission antennas.

In step S103, the PeNB 200-2 calculates a communication capacity of the self-cell when the requested power saving communication mode is set in response to reception of the setting request (Partial OFF Request).

In step S104, the PeNB 200-2 confirms the respective requested QoS of the UE 100 (the UE 100-1 and 100-2) in the self-cell. The requested QoS is decided on the basis of QCI (Quality Class Identifier) corresponding to a radio bearer established by the UE, for example.

In step S105, the PeNB 200-2 decides whether to perform handover of the UE 100 in the self-cell depending on whether the requested QoS can be met when the requested power saving communication mode is set. If the requested QoS cannot be met when the power saving communication mode is set, it is decided to perform handover of the UE 100 for which the requested QoS cannot be met. The description will be made herein assuming that handover of the UE 100-1 is decided to perform.

In step S106, the PeNB 200-2 transmits setting information (Measurement Config.) for instructing to measure the reception state (reception power and/or reception quality) to the UE 100-1.

In step S107, the UE 100-1 makes the measurement of the serving cell (the PeNB 200-2) and the neighboring cell (MeNB 200-1) on the basis of the setting information (Measurement Config.), and transmits a measurement result report (Measurement Report) to the PeNB 200-2.

In step S108, the PeNB 200-2 decides a handover destination of the UE 100-1 on the basis of the measurement result report (Measurement Report) from the UE 100-1. The description will be made herein assuming that the MeNB 200-1 is a handover destination.

In step S109, the PeNB 200-2 transmits a handover request to the MeNB 200-1.

In step S110, the MeNB 200-1 decides whether to accept the handover request. The description will be made herein assuming that the handover request is decided to accept. The handover request may include the information indicating that the handover is for the power saving communication mode (that is, energy saving).

In step S111, the MeNB 200-1 transmits an acknowledge response (ACK) for the handover request to the PeNB 200-2.

In step S112, the PeNB 200-2 transmits a handover command (Handover Command) for the MeNB 200-1 to the UE 100-1 in response to reception of the acknowledge response (ACK).

In step S113, the UE 100-1 performs handover to the MeNB 200-1 in response to reception of the handover command (Handover Command). The UE 100-1 then establishes connection with the MeNB 200-1 via the handover (step S114).

In step S115, the PeNB 200-2 sets the requested power saving communication mode (Partial OFF).

In step S116, the PeNB 200-2 transmits a completion notification that the power saving communication mode is set (Partial OFF Complete) to the MeNB 200-1. The completion notification (Partial OFF Complete) may include the information indicating at least one of the kind and the setting of the power saving communication mode set for the PeNB 200-2.

In this way, by notifying of the kind and setting of the power saving communication mode between the eNBs 200, and thus the MeNB 200-1 can appropriately control in consideration of the kind and setting of the power saving communication mode of the PeNB 200-2. For example, when the PeNB 200-2 performs discontinuous transmission (DTX) for stopping transmission in a specific subframe (or specific frame), the MeNB 200-1 can allocate MCS with a higher data rate value (or predetermined value or more) to the UE 100 under its control in the specific subframe (or the specific frame). For example, the MeNB 200-1 can allocate MCS with a modulation system of 64QAM to the UE 100 in the specific subframe. Further, the MeNB 200-1 can perform appropriate measurement setting (Measurement Config.) on the UE 100 under its control in consideration of the kind and setting of the power saving communication mode of the PeNB 200-2.

### (3.2) Operation pattern 2

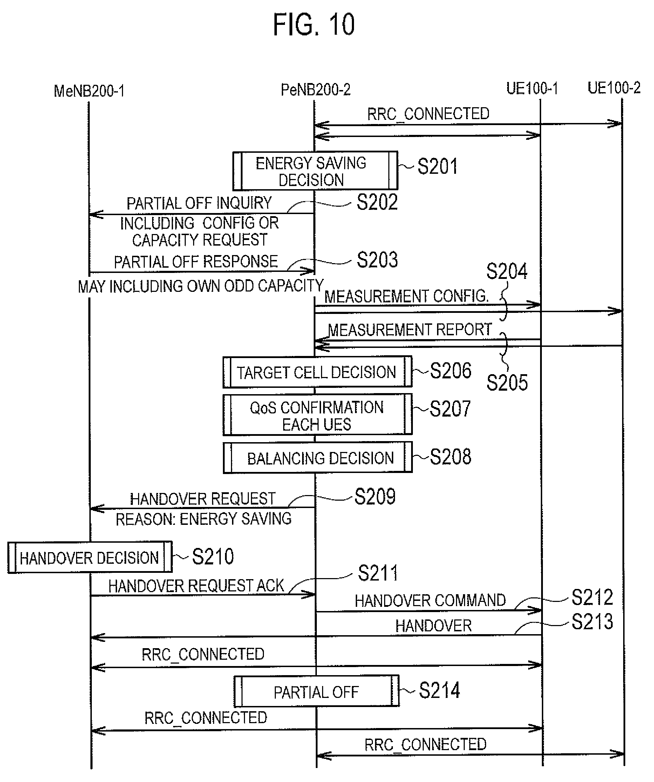

Fig. 10 is a sequence diagram of the operation pattern 2 according to the present embodiment. The operation pattern 2 is directed for performing energy saving in the PeNB 200-2 under control of the PeNB 200-2. In the initial state, the PeNB 200-2 is connected with the UE 100-1 and 100-2. The same description as in the operation pattern 1 will be omitted as needed.

As illustrated in Fig. 10, in step S201, the PeNB 200-2 decides whether to perform its energy saving. The decision is made according to any of the following first to third decision methods.

In the first decision method, the PeNB 200-2 decides whether to perform energy saving in the PeNB 200-2 on the basis of a temporal variation in traffic situation (such as quantity of connected UE in the cell, amount of exchanged data, or radio resource using rate) in the self-cell. Specifically, it is decided that energy saving is performed in a time zone with less traffics (amount of exchanged data).

In the second decision method, the PeNB 200-2 decides whether to perform energy saving on the basis of a command (energy saving ON/OFF command) from OAM (Operation and Maintenance).

In the third decision method, the MeNB 200-1 decides whether to perform energy saving on the basis of a power supply situation of the MeNB 200-1 or a power supply situation of the PeNB 200-2. When the PeNB 200-2 is notified of the power supply situation of the MeNB 200-1, the PeNB 200-2 can grasp the power supply situation of the MeNB 200-1. For example, when the power supply is shut off (in battery drive), when the amount of remaining battery lowers a predefined value, or when the self-contained power (such as solar) lowers a predefined value, the PeNB 200-2 decides to perform energy saving.

In step S202, the PeNB 200-2 transmits an inquiry as to whether the power saving communication mode is permitted (Partial OFF Inquiry) to the MeNB 200-1. The inquiry (Partial OFF Inquiry) includes the information indicating a communication capacity required for the MeNB 200-1 due to the setting of the power saving communication mode. Alternatively, the inquiry (Partial OFF Inquiry) includes the information indicating at least one of the kind and the setting of the power saving communication mode scheduled for the PeNB 200-2.

The inquiry (Partial OFF Inquiry) may include the information indicating the quantity of UE under the PeNB 200-2. Thereby, the MeNB 200-1 can make a decision in consideration of a predicted handover permission or the quantity of influenced UE.

The PeNB 200-2 may activate a timer on transmission of the inquiry (Partial OFF Inquiry), or may re-make an inquiry when the timer exceeds a certain time.

In step S203, the MeNB 200-1 transmits an acknowledge response (Partial OFF Response) for the inquiry (Partial OFF Inquiry) to the PeNB 200-2. The acknowledge response (Partial OFF Response) may include the information indicating the communication capacity (excess capacity) of the MeNB 200-1.

In step S204, the PeNB 200-2 transmits the setting information (Measurement Config.) for instructing to measure the reception state (reception power and/or reception quality) to the UE 100-1 and 100-2, respectively.

In step S205, the UE 100-1 and 100-2 measure the serving cell (the PeNB 200-2) and the neighboring cell (the MeNB 200-1) on the basis of the setting information (Measurement Config.), respectively, and transmit a measurement result report (Measurement Report) to the PeNB 200-2.

In step S206, the PeNB 200-2 decides the handover destinations (candidates) of the UE 100-1 and 100-2 on the basis of the measurement result reports (Measurement Report) from the UE 100-1 and 100-2. The description will be made herein assuming that the MeNB 200-1 is decided as a handover destination (candidate).

In step S207, the PeNB 200-2 confirms the respective requested QoS of the US 100-1 and 100-2.

In step S208, the PeNB 200-2 decides whether to perform handover of the UE 100-1 and/or 100-2 depending on whether the requested QoS can be met when the power saving communication mode is set. The PeNB 200-2 may confirm whether the requested QoS can be met on the basis of the communication capacity of the self-cell and/or communication capacity of the neighboring cell (the MeNB 200-1). For example, it is decided that the requested QoS cannot be met in the self-cell for the UE 100-1 when the power saving communication mode is set and it is decided that the requested QoS is met in the MeNB 200-1, and that handover of the UE 100-1 to the MeNB 200-1 is performed.

In step S209, the PeNB 200-2 transmits a handover request to the MeNB 200-1. The PeNB 200-2 includes the information indicating that the handover is for the power saving communication mode (energy saving) in the handover request.

In step S210, the MeNB 200-1 decides whether to accept the handover request. The description will be made herein assuming that the handover request is decided to accept. The following procedure (steps S211 to S214) is the same as the operation pattern 1.

In the present sequence, the procedure in steps S204 and S205 may be performed prior to step S202. Thereby, the handover destination of the UE 100 is clearly defined and the required communication capacity is calculated thereby to make an inquiry (Partial OFF Inquiry).

### (3.3) Operation pattern 3

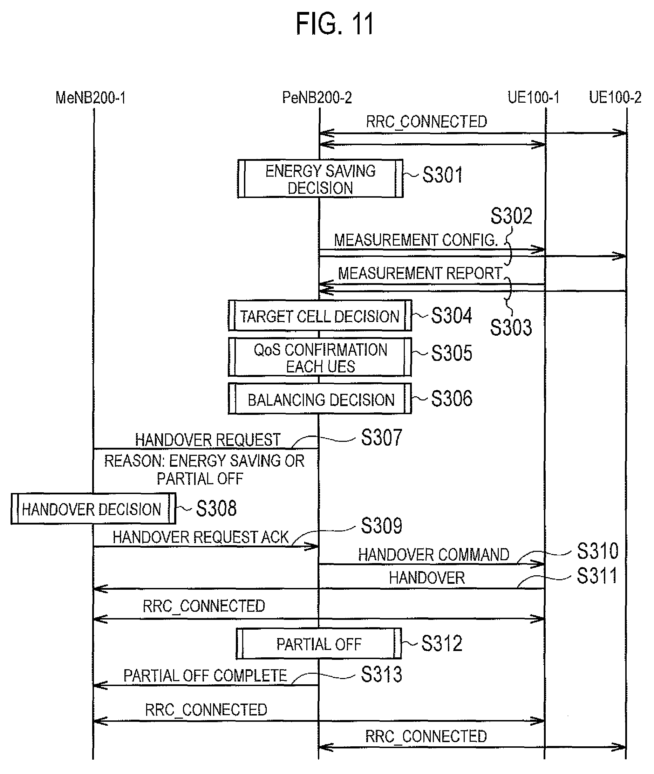

Fig. 11 is a sequence diagram of the operation pattern 3 according to the present embodiment.

The operation pattern 3 is different from the operation pattern 2 in that the PeNB 200-2 sets the power saving communication mode without making an inquiry to the MeNB 200-1, but other procedure (steps S301 to S313) is the same as the operation pattern 2. In the operation pattern 3, the PeNB 200-2 may include the information indicating at least one of the kind and the setting of the power saving communication mode in the handover request (step S307).

### (4) Power saving communication mode selection processing

In step S101, step S201, and step S301 described above, a power saving communication mode to be set for the PeNB 200-2 is selected on the basis of a predefined priority or a processing capacity/communication capacity of the PeNB 200-2 (and/or the MeNB 200-1). The priority may be an ascending order of interference to a neighboring cell or an ascending order of impact on the coverage of the self-cell.

A power saving communication mode may be applied by sequentially estimating a communication capacity when the power saving communication mode is applied according to the priority and confirming that the requested QoS can be met.

Alternatively, a power saving communication mode may be applied according to the priority, and a power saving communication mode may be reselected when a reduction in communication capacity is large at that time.

A power saving communication mode may be (re)selected with the start or end of the communication with the UE 100 as a trigger.

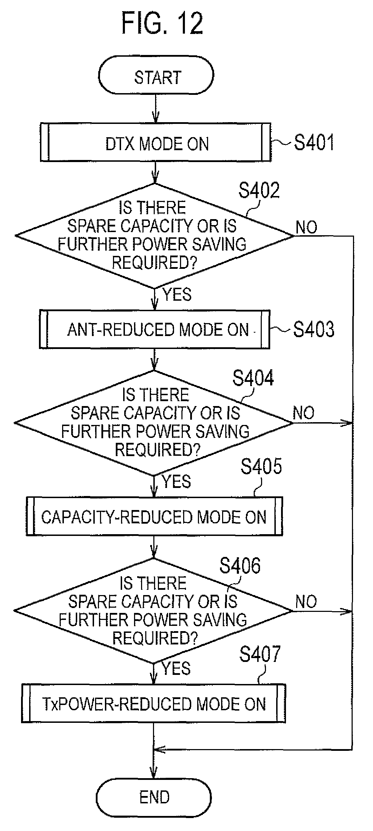

Fig. 12 is a flowchart of the power saving communication mode selection processing. There will be described herein a case in which a power saving communication mode is selected in an ascending order of interference. The PeNB 200-2 selects a power saving communication mode.

As illustrated in Fig. 12, the PeNB 200-2 decides whether to apply discontinuous transmission (DTX), reduction in transmission antennas (ANT reduced), reduction in processing capacity (Capacity reduced), and reduction in transmission power (TxPower reduced) in this order. Specifically, the PeNB 200-2 applies discontinuous transmission (step S401), and if there is a spare communication capacity (or further power saving is required), applies reduction in transmission antennas (steps S402, S403).

Further, when there is a spare communication capacity (or further power saving is required) even if reduction in transmission antennas is applied, reduction in communication capacity (reduction in processing capacity) is applied (steps S404, S405).

Further, when there is a spare communication capacity (or further power saving is required) even if reduction in communication capacity is applied, reduction in transmission power is applied (steps S406, S407).

When the power saving communication mode and the communication stop mode (mode in which communication is not made with the UE 100) are used together, the communication stop mode may be finally applied.

### (5) Exemplary message structure

The power saving communication mode setting notification (Partial OFF Complete), the power saving communication mode setting request (Partial OFF Request), and the power saving communication mode inquiry (Partial OFF Inquiry) may be assumed as information element of existing X2 message.

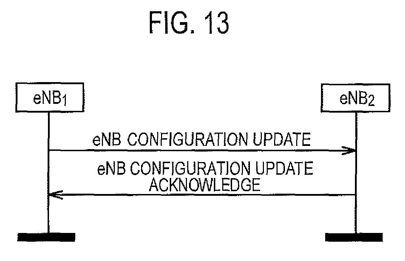

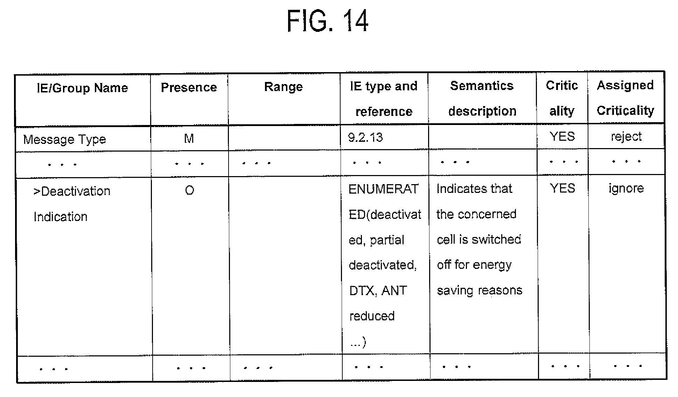

Fig. 13 and Fig. 14 are the diagrams for explaining an eNB Configuration Update message according to the present embodiment. As illustrated in Fig. 13, the eNB Configuration Update message is a kind of X2 message, and is mainly a message for notifying the neighboring eNB 200 of a setting change in the eNB 200. As illustrated in Fig. 14, the eNB Configuration Update message according to the present embodiment includes the information on the power saving communication mode setting notification (Partial OFF Complete).

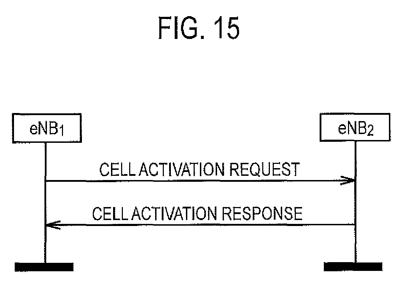

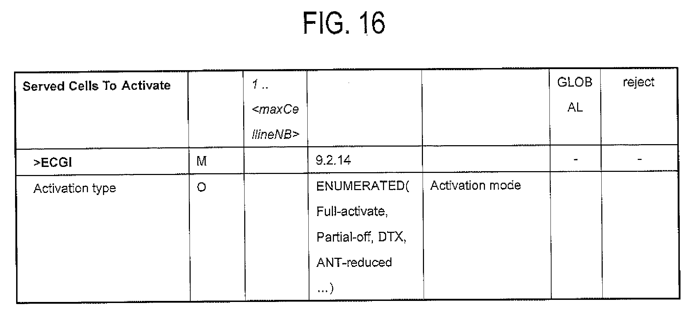

Fig. 15 and Fig. 16 are the diagrams for explaining a Cell Activation Request message according to the present embodiment. As illustrated in Fig. 15, the Cell Activation Request message is a kind of X2 message, and is mainly a message for the PeNB 200-2 to request a neighboring eNB 200 to activate a cell. As illustrated in Fig. 16, the Cell Activation Request message according to the present embodiment includes the information on the power saving communication mode setting request (Partial OFF Request).

### [Second embodiment]

A second embodiment will be described below. Differences from the above embodiment will be mainly described, and the description of the same parts will be omitted as needed.

### (1) Operation outline

An operation outline according to the present embodiment will be described.

There have been described above in the first embodiment the case (the operation pattern 1) in which the MeNB 200-1 governs to perform energy saving in the PeNB 200-2 and the case (the operation pattern 2) in which the PeNB 200-2 governs to perform energy saving in the PeNB 200-2, but there will be described in the present embodiment a case in which the master eNB (Master-eNB) 200-3 governs to perform energy saving in a slave eNB (Slave-eNB) 200-4.

Herein, the master eNB 200-3 is an eNB 200 for controlling energy saving in the slave eNB 200-4. Therefore, a relationship between the master eNB 200-3 and the slave eNB 200-4 may be not only a relationship between the MeNB 200-1 and the PeNB 200-2 but also a relationship between the eNBs 200. In the present embodiment, the relationship between the master eNB 200-3 and the slave eNB 200-4 is a relationship between neighboring eNBs. Further, the X2 interface is established between the master eNB 200-3 and the slave eNB 200-4.

With respect to decision of the master eNB 200-3 and the slave eNB 200-4, the master eNB 200-3 and the slave eNB 200-4 may be decided by a negotiation between the eNBs 200.

For example, the eNB 200-4 requests the eNB 200-3 to control the setting of the power saving communication mode in the eNB 200-4. That is, the eNB 200-4 requests the eNB 200-3 to be the master eNB 200-4. The eNB 200-3 decides whether to accept the request from the eNB 200-4. When deciding to accept the request from the eNB 200-4, the eNB 200-3 transmits a response of accepting the request from the eNB 200-4 to the eNB 200-4. The eNB 200-4 receives the response so that the relationship between the master eNB 200-3 and the slave eNB 200-4 is established.

Alternatively, the eNB 200-3 requests the eNB 200-3 to control the setting of the power saving communication mode in the eNB 200-4 to the eNB 200-4. That is, the eNB 200-3 requests the eNB 200-4 to be the slave eNB 200-4. The eNB 200-4 decides whether to accept the request from the eNB 200-3. When deciding to accept the request from the eNB 200-3, the eNB 200-4 transmits a response of accepting the request from the eNB 200-2 to the eNB 200-3. The eNB 200-3 receives the response so that the relationship between the master eNB 200-3 and the slave eNB 200-4 is established.

The request from the eNB 200-3 or the eNB 200-4 may include a self-cell size (such as transmission power). The eNB 200-3 or eNB 200-4 receiving the request may compare the self-cell size (such as transmission power) with the cell size of the transmission source of the request thereby to decide whether to accept the request. The eNB 200-3 or eNB 200-4 may decide whether to accept the request on the basis of the master/slave eNB information indicating whether a neighboring eNB 200 is the master eNB 200 or the slave eNB 200. For example, when other neighboring eNB 200 is the master eNB 200 as the eNB 200-4, the request from the eNB 200-3 may be decided to deny, or when the eNB 200-3 is also the master eNB 200-3 for other eNBs 200, the request from the eNB 200-4 may be decided to accept. The master/slave eNB information may be recoded in a neighboring cell list held in the eNBs 200 or may be recorded in a dedicated table. The eNB 200-3 and the eNB 200-4 may exchange the dedicated tables (when the dedicated tables are updated, for example).

In this way, the master eNB 200-3 and the slave eNB 200-4 are decided by a negotiation between the eNBs 200 so that energy saving is enabled in cooperation between SON and the eNBs.

The master eNB 200-3 and the slave eNB 200-4 may be decided not only by a negotiation between the eNBs 200 but also a command from a higher network (such as OAM).

### (2) Operation sequence

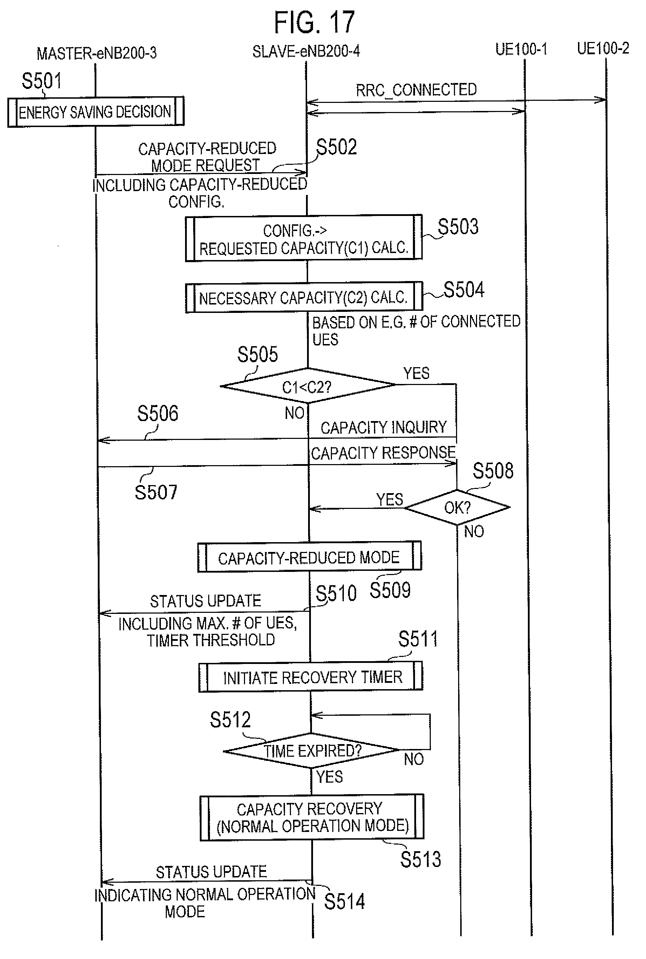

An operation sequence according to the second embodiment will be described below with reference to Fig. 17. Fig. 17 is a sequence diagram of the operation pattern according to the second embodiment.

As illustrated in Fig. 17, in step S501, the master eNB 200-3 decides whether to perform energy saving in the slave eNB 200-4. The decision is made with the decision method in step S101 in the operation pattern 1.

In step S502, the master eNB 200-3 transmits a power saving communication mode setting request to the slave eNB 200-4. Specifically, the master eNB 200-3 transmits a setting request (Capacity-reduced Mode Request) including the information indicating the setting of reduction in processing capacity as a power saving communication mode to the slave eNB 200-4. The slave eNB 200-4 receives the setting request.

In the present embodiment, the setting request includes the setting information (Capacity-reduced Config.) for setting reduction in processing capacity. The setting information may be an upper limit of UE to be processed at the same time, a time to start the power saving communication mode, a time to end the power saving communication mode, a timer value indicating a setting period of the power saving communication mode by way of example.

In step S503, the slave eNB 200-4 calculates a predicted processing capacity C1 of the slave eNB 200-4 assuming that the requested power saving communication mode is set according to the setting request.

In step S504, the slave eNB 200-4 calculates a requested processing capacity C2 currently requested for the slave eNB 200-4. For example, the slave eNB 200-4 calculates the requested processing capacity on the basis of the quantity of connected UE to the slave eNB 200-4.

In step S505, the slave eNB 200-4 decides whether the predicted processing capacity C1 lowers the requested processing capacity C2. When the predicted processing capacity C1 lowers the requested processing capacity C2 ("YES"), the slave eNB 200-4 performs the processing in step S506. On the other hand, when the predicted processing capacity C1 does not lower the requested processing capacity C2 ("NO"), the slave eNB 200-4 performs the processing in step S509.

In step S506, the slave eNB 200-4 transmits an inquiry (Capacity Inquirey) as to whether to set the power saving communication mode according to the setting request to the master eNB 200-3. The master eNB 200-3 receives the inquiry.

The inquiry may include the information indicating the predicted processing capacity C1 and the requested processing capacity C2.

The master eNB 200-3 decides whether to set the power saving communication mode according to the setting request in response to reception of the inquiry.

In step S507, the master eNB 200-3 transmits a decision result (Capacity Response) as to whether to set the power saving communication mode as a response for the inquiry to the slave eNB 200-4. The slave eNB 200-4 receives the decision result.

The decision result includes the information on whether to set the power saving communication mode according to the setting request. Further, the decision result may include the information indicating that other power saving communication mode is to be set together with the information indicating that the power saving communication mode is not set according to the setting request.

The mater eNB 200-3 may transmit a new power saving communication mode setting request instead of the decision result.

In step S508, the slave eNB 200-4 decides whether to set the power saving communication mode on the basis of the decision result. When setting the power saving communication mode ("YES"), the slave eNB 200-4 performs the processing in step S509, and when not setting the power saving communication mode ("NO"), terminates the processing.

In step S509, the slave eNB 200-4 sets the power saving communication mode according to the setting request. According to the present embodiment, the slave eNB 200-4 sets the processing capacity reduction mode.

In step S510, the slave eNB200-4 transmits status update information (Status update) to the master eNB 200-3. The master eNB 200-3 receives the status update information.

The status update information includes: at least one of the information on the setting of the power saving communication mode; the information indicating an upper limit of UE (max # of UEs) to be processed at the same time in the set power saving communication mode; and a threshold (timer threshold) of the end time of the power saving communication mode. The threshold of the end time of the power communication mode is a time to end the power saving communication mode or a timer value indicating a setting period of the power saving communication mode (expiry value of the setting timer).

According to the present embodiment, the status update information includes the information indicating that the processing capacity reduction mode is set.

The slave eNB 200-4 may transmit the status update information to not only the master eNB 200-3 but also a higher network (such as OAM), the MeNB 200, the neighboring eNB 200, and the like.

In step S511, the slave eNB 200-4 activates the setting timer (recovery timer) of the power saving communication mode.

In step S512, the slave eNB 200-4 decides whether the setting timer expires. When the setting timer expires ("YES"), the slave eNB 200-4 performs the processing in step S513, and when the setting timer does not expire ("NO"), repeatedly performs the processing in step S512.

In step S513, the slave eNB 200-4 terminates the power saving communication mode. According to the present embodiment, the slave eNB 200-4 releases the setting of the processing capacity reduction mode.

In step S514, the slave eNB 200-4 transmits the status update information to the master eNB 200-3. The master eNB 200-3 receives the status update information. According to the present embodiment, the status update information includes the information indicating that the normal mode (Normal operation mode) is set.

### [Other embodiment]

The above embodiments have assumed that only the MeNB 200-1 is a handover destination candidate from the PeNB 200-2, but when a plurality of handover destination candidates are present, it is desirable to decide an appropriate handover destination in consideration of the capacity or category (such as the number of antennas) of the UE 100.

The eNB 200 (specifically, the PeNB 200-2) decides whether to perform handover of the UE 100 in the self-cell depending on whether the requested QoS can be met when the requested power saving communication mode is set according to the present embodiment, but handover may be decided on the basis of not only the requested QoS but also RSRP
(Reference Signal Received Power) or/and RSRQ (Reference Singnal Received Quality). For example, the eNB 200 may decide whether the RSRP or/and RSRQ of the eNB 200 are less than a threshold for the UE 100, and then decide whether to perform handover of the UE 100 on the basis of the requested QoS. Thereby, the UE 100 located on an end of the self-cell can be preferentially subjected to handover. When the quantity of UE in the self-cell exceeds a threshold, the eNB 200 may decide handover on the basis of not only the requested QoS but also RSRP or/and RSRQ. If the requested QoS of at least one piece of UE among all the UE 100 in the self-cell cannot be met when the requested power saving communication mode is set, the eNB 200 may decide the UE 100 to be subjected to handover on the basis of RSRP or/and RSRQ. The eNB 200 may decide UE 100, which has high requested QoS and whose RSRP or/and RSRQ are less than a threshold, as the USE 100 to be subjected to handover.

The following 1) to 3) methods may be employed in addition to the power saving communication modes described according to the above embodiments.
1) Use of MBSFN or ABS: MBSFN (MBMS Single Frequency Network) subframes or ABS (Almost Blank Subframe) is set, and transmission is stopped in the subframe.
2) Use of TDD DwPTS in Special Subframe: A method for setting DwPTS within Special Subframe included in a radio frame in the case of TDD at a minimum time, and stopping transmission in other than the DwPTS time.
3) Use of TDD dynamic frame configuration: A method for setting a minimum downstream transmission subframe in the TDD frame setting (config.) and stopping transmission in the upstream time.

A power saving communication mode is set for the PeNB according to the first embodiment, but a power saving communication mode may be set for the MeNB.

According to the above embodiments, the MeNB 200-1 and the PeNB 200-2 may decide whether to terminate the setting of a power saving communication mode on the basis of the decision criterion as to whether to perform energy saving. For example, when the quantity of connected UE to the PeNB 200-2 exceeds a threshold, the MeNB 200-1 decides to terminate the setting of a power saving communication mode of the PeNB 200-2. When a power saving communication mode is set, the PeNB 200 may transmit the information for deciding whether to terminate the setting of the power saving communication mode to the MeNB 200-1 periodically or depending on a predetermined trigger (when the criterion for setting the power saving communication mode cannot be met, for example).

The slave eNB 200-4 transmits the status update information according to the second embodiment described above, but may transmit the status update information in response to a request or inquiry from the master eNB 200-3.

In step S505 according to the second embodiment, when the predicted processing capacity C1 lowers the requested processing capacity C2, a decision may be made as to whether to perform handover of the UE 100 in the self-cell on the basis of the requested QoS and/or RSRP or/and RSRQ.

The slave eNB 200-4 terminates the setting of a power saving communication mode after the setting timer expires according to the second embodiment, but is not limited thereto. The slave eNB 200-4 may decide whether to continue to set a power saving communication mode according to the criterion for deciding whether to perform energy saving according to the first embodiment.

The operations of the master eNB 200-3 and the slave eNB 200-4 according to the second embodiment may be performed by the MeNB 200-1 and the PeNB 200-2 according to the above embodiments as needed. Alternatively, the operations of the MeNB 200-1 and the PeNB 200-2 according to the above embodiments may be performed by the master eNB 200-3 and the slave eNB 200-4 as needed. Therefore, for example, when a power saving communication mode is set, the PeNB 200-2 may transmit the status update information to the MeNB 200-1.

The heterogeneous network structure including MeNBs and PeNBs is assumed, but other network structure may be employed.

In the aforementioned embodiments, a case of the present invention applied to a LTE system is mainly described; however, it is not limited to the LTE system, and the present invention may be applied to a system other than the LTE system.

In addition, the entire content of JP Patent Application No. 2013-080002 (filed on April 5, 2013) and JP Patent Application No. 2013-224466 (filed on October 29, 2013) is incorporated in the present specification by reference.

### INDUSTRIAL APPLICABILITY

As described above, the base station according to the present invention, can realize energy saving while restricting a reduction in service quality, and thus it is useful in a mobile communication field.

## Claims

1. A base station for performing communication with a user terminal in a self-cell, the base station comprising:
a controller configured to control handover of the user terminal to a neighboring base station before setting a power saving communication mode for performing communication with the user terminal while reducing consumed power in the base station.

2. The base station according to claim 1,
wherein the controller controls the handover of the user terminal to the neighboring base station on the basis of QoS requested for communication with the user terminal.

3. The base station according to claim 2,
wherein if the QoS cannot be met when the power saving communication mode is set, the controller performs the handover, and then sets the power saving communication mode.

4. The base station according to claim 3,
wherein the controller includes information indicating that the handover is for the power saving communication mode in a handover request to be transmitted to the neighboring base station in a procedure of the handover.

5. The base station according to claim 1,
wherein the controller sets the power saving communication mode in response to reception of a setting request of the power saving communication mode from the neighboring base station to the base station.

6. The base station according to claim 5,
wherein a plurality of kinds of power saving communication modes with different methods for reducing consumed power in the base station are defined, and
the setting request includes information indicating at least one of the kind and the setting of the power saving communication mode requested for the base station.

7. The base station according to claim 1,
wherein the controller transmits, to a neighboring base station, an inquiry as to whether the power saving communication mode is permitted, and
the controller sets the power saving communication mode in response to reception of an acknowledge response for the inquiry from the neighboring base station to the base station.

8. The base station according to claim 7,
wherein a plurality of kinds of power saving communication modes with different methods for reducing consumed power in the base station are defined, and
the inquiry includes information indicating at least one of the kind and the setting of the power saving communication mode scheduled by the base station.

9. The base station according to claim 7,
wherein the inquiry includes information indicating a communication capacity requested for the neighboring base station due to the setting of the power saving communication mode, and/or information indicating the number of user terminals under control of the base station.

10. The base station according to claim 1,
wherein when the power saving communication mode is set, the controller transmits, to the neighboring base station, a completion notification indicating that the power saving communication mode is set.

11. The base station according to claim 10,
wherein a plurality of kinds of power saving communication modes with different methods for reducing consumed power in the base station are defined, and
the completion notification includes information indicating at least one of the kind and the setting of the power saving communication mode set for the base station.

12. The base station according to claim 11,
wherein the information indicating the setting of the power saving communication mode includes at least either a system frame number or a subframe number to which the power saving communication mode is applied.

13. The base station according to claim 12,
wherein the information indicating the setting of the power saving communication mode is used to allocate MCS whose data rate is a predetermined value or more to the user terminal to which a radio resource within a subframe indicated by the subframe number or a radio resource within a subframe configuring a frame indicated by the system frame number is allocated in the neighboring base station.

14. The base station according to claim 1,
wherein a plurality of kinds of power saving communication modes with different methods for reducing consumed power in the base station are defined, and
a power saving communication mode to be set for the base station is selected from among the power saving communication modes on the basis of a predefined priority or a communication capacity of the base station.

15. A base station for performing communication with a user terminal in a self-cell,
wherein a plurality of kinds of power saving communication modes with different methods for reducing consumed power in the base station are defined, and
the base station comprises a controller configured to notify a neighboring base station of information indicating at least one of the kind and the setting of a power saving communication mode selected from among the plurality of kinds of power saving communication modes.

16. The base station according to claim 15, further comprising:
a receiver configured to receive a setting request of requesting to set a power saving communication mode from among the plurality of kinds of power saving communication modes from the neighboring base station,
wherein the controller selects the power saving communication mode from among the plurality of kinds of power saving communication modes, and
the controller notifies the neighboring base station transmitting the setting request of the information.

17. The base station according to claim 16,
wherein the controller requests the neighboring base station to control the setting of the power saving communication mode in the base station, and
the receiver receives the setting request from the neighboring base station receiving a response of accepting the request.

18. The base station according to claim 16,
wherein the receiver receives a request for the neighboring base station to control the setting of the power saving communication mode in the base station from the neighboring base station, and
when the controller transmits a response of accepting the request to the neighboring base station, the receiver receives the setting request from the neighboring base station.

19. The base station according to claim 16,
wherein the controller holds a list recording therein the neighboring base station for controlling the setting of the power saving communication mode in the base station, and
the controller notifies the neighboring base station of the information on the basis of the list.

20. The base station according to claim 16,
wherein the setting request includes information for requesting a mode of restricting an upper limit of a processing load of the base station less than a predetermined value while keeping coverage of the base station as a power saving communication mode to be set for the base station from among the plurality of kinds of power saving communication modes.

21. The base station according to claim 16,
wherein the setting request includes information indicating at least any of a time to start the power saving communication mode, a time to end the power saving communication mode, and a timer value indicating a setting period of the power saving communication mode.

22. The base station according to claim 16,
wherein when a predicted processing capacity of the base station lowers a processing capacity currently requested for the base station assuming that the power saving communication mode is set according to the setting request, the controller notifies the neighboring base station of an inquiry as to whether to set the power saving communication mode according to the setting request.
